# EUROPEAN PATENT SPECIFICATION

(11) **EP 0 568 852 B1**
(45) Date of publication and mention of the grant of the patent: **11.11.1998**
(21) Application number: 93106290.5
(22) Date of filing: 19.04.1993
(51) Int. Cl.: F16C 29/04, F16C 13/00

(54) **A linear bearing with rolling members consisting of rollers with curved profiles**
Linearlager mit Rollen, die ein gekrümmtes Profil aufweisen
Palier linéaire à rouleaux avec des rouleaux comportant un profil courbé

(30) Priority: 04.05.1992 IT MI921054
(43) Date of publication of application: 10.11.1993
(73) Proprietor: ROLLON S.p.A., 20099 Sesto San Giovanni (Milano) (IT)
(72) Inventor: Sacheli, Giuseppe, I-20145 Milano (IT)
(74) Representative: Fitzner, Uwe, Dr.

(56) References cited:
- CH-A- 248
- CH-A- 239 180
- FR-A- 2 305 634
- FR-A- 2 517 771
- US-A- 4 387 942
- US-A- 4 621 876
- ROLLON, Katalog 41-2D, Linear Kugellager
- IBC Wälzlager GmbH, Technische Information Nr.10D (Ergänzung des Katalogs 41-4hD)Laufschienen Typ U mit flachen Laufbahnen
- IBC Wälzlager GmbH, Technische Information Nr.10bD (Ergänzung des Katalogs 41-4hD) Linearlager für unbegrenzte Hübe, Serie U/CSW

## Description

The present invention refers to the field of rolling linear bearings, such as are generally applied in many very different sectors, to guide the linear movement of members, with friction reduced to a minimum.

Linear bearings are known whose rolling members consist of idle rollers, carried by a movable element or slider; the said rollers slide along the relative fixed rectilinear guide support, also called the rectilinear rail. Such support is shaped in such a way that the rollers collaborate with the conjugated bearing surfaces of the support, in such a way as to correctly bear loads at right angles to the axis of the rollers and also loads directed along the axis of the rollers. From document CH-A-248 there is known a linear bearing comprising rolling members consisting of rollers and longitudinal rails on which the said rollers engage, whereby the rollers have active surfaces which comprise a contact surface with solely radial effect, and contact surfaces with radial-axial effect. However, the rail-rollers assembly does not seem to realize a constraint to a movement at right angles or in a transversal direction (upwardly) with respect to the running direction of the rollers and thus the teaching cannot be used for modern linear bearings or guides.

For heavy duties, the use is foreseen of two opposed longitudinal parallel rails and two roller units or the same slider. This involves the necessity for perfect reciprocal alignment between the two supports. This can be realized only with difficulty and at a high cost. In addition, even when good alignment between the rails is achieved, other factors can intervene, such as thermal expansion or under load distortion, which compromise alignment. Document US-A-4 621 876 discloses a drawer provided with rollers and longitudinal rails; a lower guide roller is disclosed having a tread surface of slender circumferential band construction with a pair of sloping guide walls, and the rail therefor is disclosed with a V-shaped cross section, having a flat bottom and a pair of sloping flat side walls. While the specification recites that the tread and the sloping walls of the rollers engage both the flat bottom and the sloping sides of the rail, from the figure it is evident that the engagement only occurs between the tread of the roller and the flat bottom of the rail, and/or one sloping wall thereof, the distance between the two sloping sides of the rail being such that said sloping sides of the rail cannot be engaged at the same time by the roller. From both the ways of operating, the one said in the specification and the other shown in the figure, it appears that between roller and rail there is not such a constant engagement with radial-axial effect as to resist a thrust according to the roller axis; in fact this function is given to an upper rail-roller assembly, whose roller has its axis at right angles with respect to the axis of the lower roller. Moreover. means are not disclosed by which the assembly resists a thrust at right angles with respect to the axis of the lower roller and upwards, that is in a direction opposite to the flat bottom of the rail, since it is not important for a drawer. Therefore, the document does not provide a useful teaching in the field of linear rails, in particular for heavy works. Moreover, linear roller bearings developed by the applicant are known comprising rollers which comprise active surfaces with solely radial and mixed radial-axial effect and rails having opposite flanges with active surfaces thereon. According to this state of the art, both flanges of at least one rail comprise radial-axial type active surfaces which are sloping with respect to the roller axis. Furthermore, the roller-contact surfaces with mixed radial-axial effect comprise opposed frustoconical surfaces with convex arc generatrices. With these roller bearings, it is possible to compensate deviations in the direction parallel to the axis of the rollers. However, it is not possible to compensate for errors in the level of the rails and/or inclination of the rails.

The aim of the present invention is to avoid the need for providing expensive, perfect alignment of the rails.

Such aim has been achieved, according to the present invention, with a linear bearing as claimed in claim 1. Further innovative characteristics are described in the subsequent claims.

In particular, according to the invention, by means of one of the two longitudinal rails, the only constraint of the respective rollers to radial loads is realized (therefore for such rail no constraint to loads directed along the axis of the rollers is realized) and the restraint of the slider in the direction of the axis of rotation of the rollers, or, the constraint on the loads in the axial direction, is entrusted solely to the other fixed longitudinal rail. In such a way, forcing and consequent harmful overloading are avoided, as it might be due to possible errors in the alignment and distance between the two rails. For this purpose, the invention foresees rollers with radial effect contact surfaces only, and rollers with radial-axial effect contact surfaces which are frustoconical, with convex arc generatrices. The rails have opposite flanges, longitudinal active surfaces on said flanges, facing the opposite flange, respectively, and at least one of these active surfaces comprising longitudinal surfaces sloping with respect to the roller axis. According to the invention, there is one rail having said sloped longitudinal active surface on a first flange while having a radial type active surface on the other flange facing the first flange. Due to this arrangement the advantages of the invention can be achieved, i.e. the possibility to compensate for deviations in the level and/or the inclination of the rails. The active surfaces of each roller consist both of contact surfaces for a rail with only radial effect, and of contact surfaces for a rail with radial and axial effect. In more detail, each roller comprises a radial effect peripheral contact surface, which is cylindrical-shaped, with a convex arc generatrix.

The longitudinal rails respectively may consist of a C-shaped section of the so-called "closed" type, with oblique longitudinal guiding surfaces on one or both flanges, and an "open" C-shaped section with substantially parallel guiding surfaces on each of the flanges.

The roller units are identical, and suitable both for radial use and also radial-axial use, allowing the rolling components themselves to be used independently of the assembly characteristics; therefore the realization of the components is simplified and made more economical. In addition, there is no need to provide a precise adjustment of the parallelism of the rails. The influence is avoided or drastically reduced of heat or under load distortion on the rails.

The invention is described below with reference to the diagrammatic drawings appended, provided merely for the sake of illustration, and in which:
- figure 1: is a broken-off axial sectional view of a roller of a prior art linear bearing;
- figure 2: is a broken-off axial sectional view of a second type of roller for linear bearings of a known type;
- figure 3: is a front view of a linear bearing with two longitudinal parallel rails according to the state of the art;
- figure 4: illustrates the profile of a roller according to the present invention, in a broken-off axial sectional view and the profile, still in a broken-off axial sectional view, of a radial-axial action longitudinal rail;
- figure 5: shows the profile of the roller in figure 4 in engagement on a longitudinal rail with radial action only;
- figure 6: is a broken-off diagrammatic illustration along 6-6 in figure 3;
- figure 7: is a view similar to the one in figure 3, of a modified embodiment of the bearing;
- figure 8 and figure 9: are views similar to figure 7, which show possible reciprocal positions of the slider and the rails.

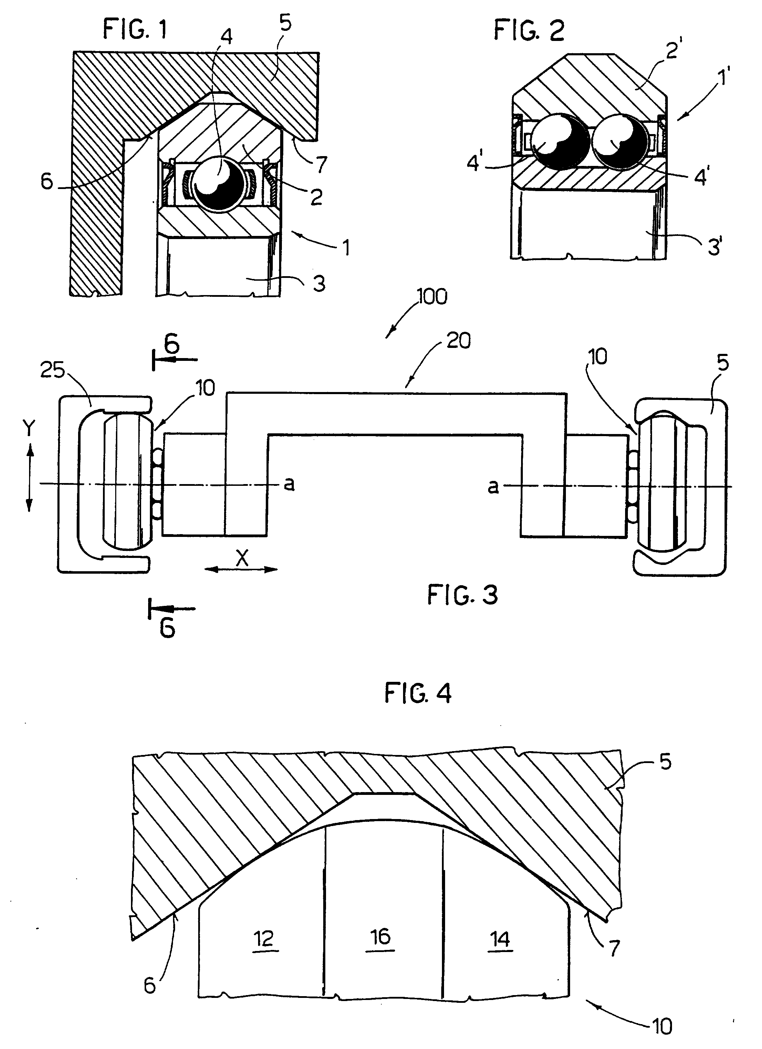

With reference to figures 1 and 2, the known rollers 1, 1' comprise outer active rings 2, 2', which collaborate with respective inner rings 3, 3' (hubs) through rolling means, which in the example illustrated consist of a series of balls 4 (figure 1), or two series of balls 4' (figure 2). The roller 1 (or 1') usually rolls along a longitudinal rail 5 which has two flanges, each with radial-axial longitudinal engaging surfaces, shown with 6, 7. These consist of flat surfaces, extending longitudinally, sloping with respect to the roller axis, in such a way that each flange is approximately V-shaped in a section transverse to the direction of the movement of the roller, or in a section along the roller axis. In an ideal assembly and working condition, the axis of rotation of the roller would be horizontal. It is evident, however, that the structure in figure 1 does not permit misalignments or imperfections in assembly.

The roller 10 according to the invention is illustrated in figures 3, 4, 5 and comprises outer active surfaces consisting of two substantially opposed frustoconical profiles 12, 14, with a wide radius convex arc generatrix. In the central area of the roller itself, between the two active surfaces 12, 14 of the roller, a third active surface 16 is foreseen, which is cylindrical with a wide radius convex arc generatrix.

As an alternative, the active surfaces can be elliptical.

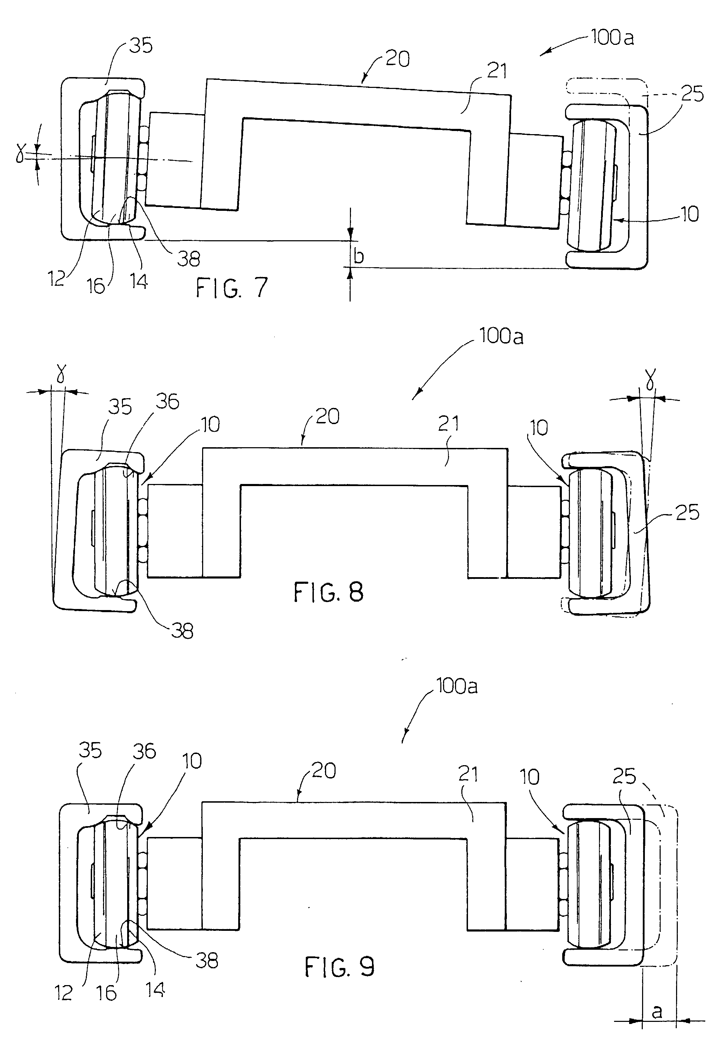

In figure 6 a linear bearing 100 according to the invention is illustrated, whose slider 20 is provided with lateral roller units 10 according to this invention. Alternative rollers in each unit engage with an upper flange and a lower flange of a relative longitudinal lateral rail. The axis of a roller which engages with the upper flange of the rail is shown with a, and the axis of a roller which engages with the lower flange of the rail is shown with b. The rollers for each rail are of a number suitable for the working and resistance characteristics required, and they rest in order and alternatively on one and the other flange of the rail (this arrangement is already known). Adjusting means are foreseen for the position of the axis of each roller (not illustrated as they are already known), intended to produce contact and possible forcing of the rollers against the respective opposed contact surfaces.

In figure 4 the wheel 10 is drawn engaged with a longitudinal rail like the one illustrated in figure 1 with reference numeral 5.

The convex frustoconical surfaces 12 and 14 of the wheel collaborate with the opposed sloping active surfaces 6, 7 of the rail with a substantially punctiform contact. The coupled surfaces 6, 12 and 7, 14 realize a constraint between rollers and rail, both in the direction of the axis a of the roller, and in the direction radial with respect to the same axis.

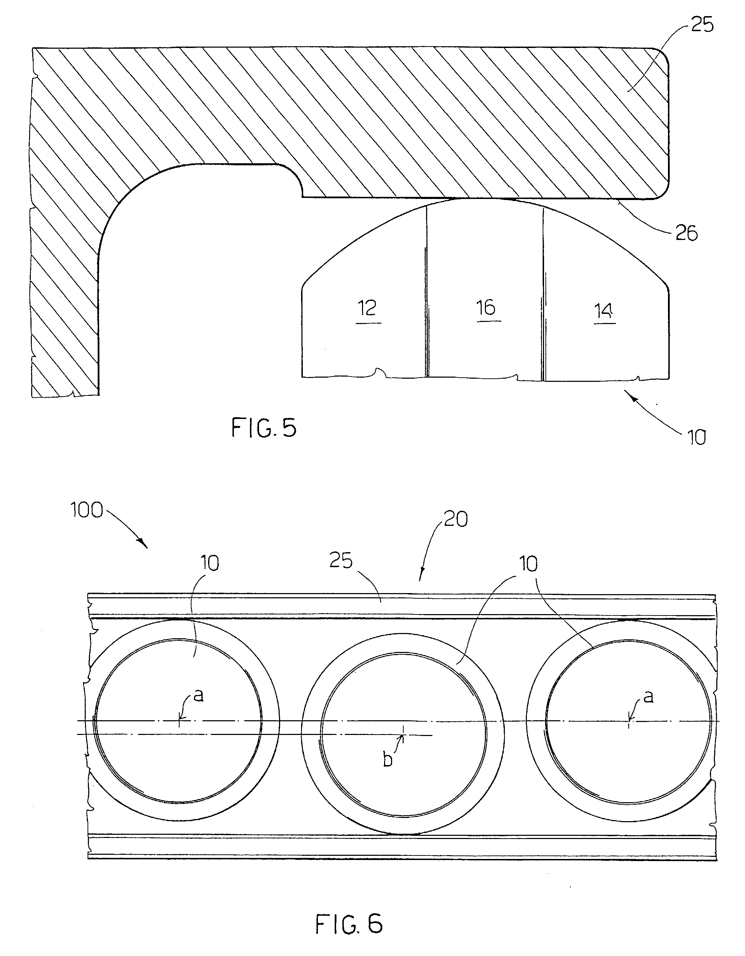

In figure 5 the roller 10 is drawn engaged with a rail 25 which is also the subject of the invention, having facing active longitudinal surfaces 26, which are substantially flat and parallel to the ideal position of the roller axis. The collaboration between the convex cylindrical surface 16 of the roller and the flat surface 26 tangent to the surface 16 realizes a constraint only in the radial direction with respect to the roller axis and not in the axial direction.

The linear bearing 100 in figure 3 comprises two mechanical units with rollers equal to each other, one of which units is coupled with a rail of type 5 with sloping active surfaces, and the other is coupled with a rail of type 25 with flat active surfaces.

The rail 5 can be used alone (without rail 25 with its relative roller unit) when the nature of the loads and functions of the system allow it.

When a double support is required, with two rails 5 and 25, the different conformation of the contact surfaces with the rollers allows the reciprocal alignment of the two rails to be somewhat less exacting, allowing the rail 25 mutual movements with respect to the corresponding rollers, in the direction of the arrows X (mutual distance of the rails).

Limited misalignments of the two longitudinal rails are also possible, in the direction of the arrows Y (fig. 3), and possible limited differences in angular position.

In the figures 7, 8, 9 a modified embodiment of the bearing is shown, referenced 100a, in which the slider 20 (which can comprise a movable part 21 of a machine) provided with rollers 10 as described above, is guided by means of C-shaped lateral rails, the rail on the right being of the type with parallel active surfaces with radial engagement and therefore indicated again with 25, while the rail on the left is of a mixed type, with a radial type active surface 38 and a radial-axial type active surface 36, and is indicated as a whole with 35. In particular, the active surface 38 is flat and substantially parallel to the axis of the roller 10, in the ideal resting conditions, and the surface 36 comprises longitudinal planes sloping transversely with respect to the said roller axis.

Figure 7 shows how the bearing 100a can easily be positioned to avoid defective positioning of the rails. In particular, the rail 25 is positioned lower down at a distance b with respect to the rail 35; the roller axis is positioned at an inclination of γ with respect to the horizontal and still allows the sliding function of the bearing.

Figure 8 illustrates how the bearing 100a can compensate for wrong or deformed positioning of one or both the rails 25, 35, which, for example, are positioned at an angle γ with respect to the vertical position foreseen.

Figure 9 illustrates how the bearing 100a can compensate for wrong assembly of the rails by an excess of distance a.

The conformation of the active surfaces of the rollers with convex generatrices (for example circular or elliptical arc contact surfaces) allow a more exact contact by avoiding incorrect strains and by realizing automatic correction of any small errors of angle in mutual positioning of the two parts, and in all a better load capacity.

## Claims

1. A linear bearing comprising rollers (10) and a longitudinal rail or longitudinal rails (25, 35) on which said rollers engage; the rollers having active surfaces which consists of a contact surface (16) with solely radial effect and contact surfaces (12, 14) with radial-axial effect, the contact surfaces (12, 14) with radial-axial effect of the rollers (10) consisting of opposed frustoconical surfaces with convex arc generatrices; said rail or rails having opposite flanges, longitudinal active surfaces (6, 7, 26, 36, 38) on said flanges facing the opposite flange, respectively, one of said active surfaces on a flange of the rail or one of the rails consisting of longitudinal surfaces (6, 7, 36) sloping with respect to the roller axis, charaterised in that the longitudinal active surface on the other flange of said rail (25, 35) or said one of the rails only comprises a radial type active surface (38) facing the flange with the sloping longitudinal surfaces.

2. A linear bearing according to claim 1, characterised in that the radial type active surface (38) facing the first mentioned flange is substantially flat.

3. A linear bearing according to claim 1, characterised in that the roller contact surface (16) with solely radial effect is substantially cylindrical with a wide radius convex arc generatrix, positioned in the central area between the frustoconical surfaces (12, 14).

4. A linear bearing according to claim 1, characterised in that the roller active surfaces (12, 14, 16) have a circular or elliptical arc shape in a sectional view in a plane containing the roller axis.

5. A linear bearing according to claim 1, comprising a slider (20) with two roller units (10) and two substantially parallel longitudinal rails (35, 25), each roller unit engaging with a rail, the second rail (25) comprising two flat facing longitudinal parallel active surfaces (25) of the flanges thereof.

## Patentansprüche

1. Linearlager mit Rollen (10) und einer Längsschiene oder Längsschienen (25, 35), an die die Rollen angreifen; wobei die Rollen Wirkflächen aufweisen, die aus einer Kontaktfläche (16) mit alleiniger Radialwirkung und Kontaktflächen (12, 14) mit Radial-Axial-Wirkung bestehen, wobei die Kontaktflächen (12, 14) mit Radial-Axial-Wirkung der Rollen (10) aus gegenüberliegenden kegelstumpfförmigen Flächen mit konvexen Bogenerzeugenden bestehen; wobei die Schiene(n) gegenüberliegende Flansche aufweisen und Längswirkflächen (6, 7, 26, 36, 38) an den Flanschen zu dem jeweils gegenüberliegenden Flansch weisen, wobei eine der Wirkflächen an einem Flansch der Schiene oder einer der Schienen aus Längsflächen (6, 7, 36) besteht, die bezüglich der Rollenachse geneigt sind, dadurch gekennzeichnet, daß die Längswirkfläche an dem anderen Flansch der Schiene (25, 35) oder einer der Schienen nur eine Radialwirkfläche (38) umfaßt, die zu dem Flansch mit den geneigten Längsflächen weist.

2. Linearlager nach Anspruch 1, dadurch gekennzeichnet, daß die zu dem erstgenannten Flansch weisende Radialwirkfläche (38) im wesentlichen flach ist.

3. Linearlager nach Anspruch 1, dadurch gekennzeichnet, daß die Rollenkontaktfläche (16) mit alleiniger Radialwirkung im wesentlichen zylindrisch ist und eine konvexe Bogenerzeugende mit großem Radius aufweist, die in dem mittleren Bereich zwischen den kegelstumpfförmigen Flächen (12, 14) positioniert ist.

4. Linearlager nach Anspruch 1, dadurch gekennzeichnet, daß die Rollenwirkflächen (12, 14, 16) in Schnittansicht in einer die Rollenachse enthaltenden Ebene eine kreisförmige oder elliptische Bogenform haben.

5. Linearlager nach Anspruch 1 mit einem Gleitstück (20), das zwei Rolleneinheiten (10) und zwei im wesentlichen parallele Längsschienen (35, 25) aufweist, wobei jede Rolleneinheit mit einer Schiene in Eingriff steht, wobei die zweite Schiene (25) zwei flache gegenüberliegende parallele Längswirkflächen (25) ihrer Flansche aufweist.

## Revendications

1. Palier linéaire comprenant des rouleaux (10) et un rail longitudinal ou des rails longitudinaux (25, 35) sur lequel ou lesquels s'engagent lesdits rouleaux; les rouleaux présentant des surfaces actives comportant une surface de contact (16) à effet radial seul et des surfaces de contact (12, 14) à effet radial-axial, les surfaces de contact (12, 14) à effet radial-axial des rouleaux (10) comportant des surfaces tronconiques opposées à génératrices d'arc convexes; ledit rail ou lesdits rails présentant des rebords opposés, des surfaces actives longitudinales (6, 7, 26, 36, 38) sur lesdits rebords faisant face au rebord opposé, respectivement, l'une desdites surfaces actives sur un rebord du rail ou d'un des rails comportant des surfaces longitudinales (6, 7, 36) inclinées par rapport à l'axe des rouleaux,
caractérisé en ce que la surface longitudinale active sur l'autre rebord dudit rail ou dudit un des rails comprend uniquement une surface active de type radial (38) faisant face au rebord aux surfaces longitudinales inclinées.

2. Palier linéaire selon la revendication 1, caractérisé en ce que la surface active de type radial (38) faisant face au rebord mentionné en premier est substantiellement plane.

3. Palier linéaire selon la revendication 1, caractérisé en ce que la surface de contact (16) des rouleaux à effet radial seul est substantiellement cylindrique avec une génératrice d'arc convexe à grand rayon, positionnée dans la région centrale entre les surfaces tronconiques (12, 14).

4. Palier linéaire selon la revendication 1, caractérisé en ce que les surfaces actives (12, 14, 16) des rouleaux présentent une forme d'arc circulaire ou elliptique dans une vue en coupe, dans un plan contenant l'axe des rouleaux.

5. Palier linéaire selon la revendication 1, comprenant une pièce coulissante (20) avec deux unités à rouleau (10) et deux rails longitudinaux (35, 25) substantiellement parallèles, chaque unité à rouleau s'engageant avec un rail,
le second rail (25) comprenant deux surfaces actives longitudinales parallèles planes en regard (25) des rebords de celui-ci.
